# EUROPEAN PATENT SPECIFICATION

(11) **EP 3 770 213 B1**
(45) Date of publication and mention of the grant of the patent: **25.02.2026**
(21) Application number: 19772605.2
(22) Date of filing: 19.03.2019
(51) Int. Cl.: C08L 23/26, B32B 27/32, B65D 65/02, C08L 23/14

(54) **COMPOSITION FOR SKIN PACKAGING, SEALANT FOR SKIN PACKAGING, AND PACKAGING BODY FOR SKIN PACKAGING**
ZUSAMMENSETZUNG FÜR SKIN-VERPACKUNGEN, DICHTUNGSMITTEL FÜR SKIN-VERPACKUNGEN UND VERPACKUNGSKÖRPER FÜR SKIN-VERPACKUNGEN
COMPOSITION POUR PELLIPLACAGE, AGENT D'ÉTANCHÉITÉ POUR PELLIPLACE ET CORPS D'EMBALLAGE POUR PELLIPLAGE

(30) Priority: 20.03.2018 JP 2018053520
(43) Date of publication of application: 27.01.2021
(73) Proprietor: Dow-Mitsui Polychemicals Co., Ltd., Tokyo 104-0028 (JP)
(72) Inventor: NISHIJIMA, Koichi, Ichihara-shi, Chiba 299-0108 (JP); HIRONAKA, Yoshitaka, Ichihara-shi, Chiba 299-0108 (JP); MACHIYA, Hiroaki, Ichihara-shi, Chiba 299-0108 (JP); GONOHE, Hisao, Ichihara-shi, Chiba 299-0108 (JP)
(74) Representative: Gulde & Partner
(86) International application number: PCT/JP2019/011443
(87) International publication number: WO 2019/181942

(56) References cited:
- EP-A1- 2 452 974
- WO-A1-2006/094617
- JP-A- 2002 316 392
- JP-A- 2003 146 356
- JP-A- 2003 513 131
- JP-A- H 058 356
- JP-A- S5 519 528
- JP-A- S63 114 646
- US-A- 4 550 141
- US-A- 4 945 005

## Description

### BACKGROUND OF THE INVENTION

### Field of the Invention

The present invention relates to a composition for a skin pack, a sealant for a skin pack, and a package for a skin pack.

### Related Art

Skin pack packaging refers to vacuum packaging of content performed by transporting a bottom material tray with the content (i.e., the article to be packaged) thereon into a vacuum chamber, evacuating the vacuum chamber, heating a lid material film, and, with compressed air, bringing the lid material film into close contact with the content to effect pseudo-adhesion by a differential pressure caused by release of an upper chamber.

Conventionally, as a film for skin pack packaging of sliced ham, bacon, and processed marine products, for example, films having a layered structure of poly(vinyl chloride) (PVC) / poly(vinylidene chloride) (PVDC) / ethylene-vinyl acetate copolymer (EVA) have been generally used.

However, when a processed marine product containing sharp bones and the like is packaged, when the package is stored at low temperature, or the like, the film may have inferior resistance to perforation (generation of pinholes) (hereinafter, also referred to as "anti-puncture strength"). Further, when the bottom material (e.g., the tray) is formed from a polypropylene (PP) resin, there has been the drawback of poor adhesion between the film and the tray. In addition, there have been demands that the packaging materials should be free from chlorine in view of environmental concerns.

As a multilayer film for food packaging which is flexible and has favorable adhesion to content, a soft multilayer film is disclosed, which includes at least a nylon layer (A), a gas barrier layer (B), an adhesive layer (C), an ionomer layer (D), and a layer of an ethylene/vinyl acetate copolymer having a vinyl acetate content of 10% or more (E), in which the layer configuration is (A) - (B) - (C) - (D) - (E), (A) - (C) - (B) - (C) - (D) - (E), (B) - (A) - (C) - (D) - (E), (B) - (C) - (A) - (C) - (D) - (E), or (A) - (B) - (A) - (C) - (D) - (E) (for example, see Japanese Patent No. 3085626).

Furthermore, as a coextruded multilayer film for a skin pack lid material which has favorable anti-puncture strength and favorable adhesion to content, a coextruded multilayer film for a skin pack lid material has been disclosed, which is formed from an ionomer resin (IO) layer as an outer layer, a saponified ethylene/vinyl acetate copolymer (EVOH) layer as an intermediate layer, and a layer of an ethylene/vinyl acetate copolymer resin (EVA) containing vinyl acetate in a range of from 8 mol% to 20 mol%, or a hot melt resin (HM) layer, as an innermost layer, and in which the thickness ratio of the ionomer resin (IO) layer to the total film thickness is from 40% to 70%, and the thickness ratio of the layer of the saponified ethylene/vinyl acetate copolymer (EVOH) is 10% or less (for example, see JP 5034237 B).

US 4 945 005 A discloses a thermoplastic composition and articles made therefrom which are adherent to preparative, protective and/or decorative coatings, e.g., automotive paints.

US 4 550 141 A discloses blends of an ionomer with a propylene/a-olefin copolymer, and heat-sealable films and/or laminates made from such blends. The blends have a content of the ionomer in the blend of 80 to 93 wt% and the content of the olefin copolymer of 7 to 20 wt%.

### SUMMARY OF THE INVENTION

### Technical Problem

Various attempts have hitherto been made to obtain a film for a skin pack having various functions, as described in JP 3085626 B and JP 5034237 B.

The present invention aims to provide a composition for a skin pack capable of providing a film for a skin pack in which the occurrence of a stringiness phenomenon is inhibited, while maintaining favorable ease of peeling, as compared to conventional films for a skin pack, as well as a sealant for a skin pack, and a package for a skin pack using the composition.

### Solution to Problem

The invention includes the following aspects.
<1> A composition for a skin pack, including:
   an ionomer (A) of an ethylene/unsaturated carboxylic acid copolymer having a melt flow rate (JIS K 7210-1999, 190°C, 2160 g load) of 6 g/10 min or more; and
   a polyolefin (B) having a melt flow rate (JIS K 7210-1999, 190°C, 2160 g load) of 6 g/10 min or less,
   wherein a content of the ionomer (A) is from 40% by mass to 75% by mass with respect to 100% by mass of the resin components in the composition for a skin pack, and
   wherein a content of the polyolefin (B) is from 25% by mass to 50% by mass with respect to 100% by mass of resin components in the composition for a skin pack.
<2> The composition for a skin pack according to <1>, wherein a content of an unsaturated carboxylic acid in the ethylene/unsaturated carboxylic acid copolymer is from 10% by mass to 20% by mass.
<3> The composition for a skin pack according to <1> or <2>, wherein the polyolefin (B) includes at least one selected from the group consisting of a constituent unit derived from propylene and a constituent unit derived from 1-butene.
<4> The composition for a skin pack according to any one of <1> to <3>, wherein the ionomer (A) is at least one selected from the group consisting of a zinc ionomer of an ethylene/unsaturated carboxylic acid copolymer and a sodium ionomer of an ethylene/unsaturated carboxylic acid copolymer.
<5> The composition for a skin pack according to any one of <1> to <4>, wherein a content of the ionomer (A) is from 50% by mass to 75% by mass with respect to 100% by mass of the resin components in the composition for a skin pack.
<6> The composition for a skin pack according to any one of <1> to <5>, further including a tackifier resin (C),
   wherein a content of the tackifier resin (C) is from 5% by mass to 25% by mass with respect to 100% by mass of the resin components in the composition for a skin pack.
<7> A sealant for a skin pack, including the composition for a skin pack according to any one of <1> to <6>.
<8> A package for a skin pack, including:
   a first film; and
   a second film,
   wherein the first film and the second film are capable of being cohered together to content in a skin pack, and
   wherein at least one of the first film or the second film includes the sealant for a skin pack according to <7>.
<9> The package for a skin pack according to <8>, wherein the sealant for a skin pack is disposed on at least a part of a surface of at least one of the first film or the second film that contacts the content.
<10> The package for a skin pack according to <8> or <9>, wherein:
   the first film includes at least one layer containing an ionomer (D); and
   the second film includes the sealant for a skin pack.
<11> The package for a skin pack according to <10>, wherein:
   the ionomer (D) contains a zinc ionomer; and
   a layer containing the ionomer (D) is disposed on at least a part of a surface of the first film that contacts the content.

### Advantageous Effects of Invention

According to the aspects of the invention, a composition for a skin pack capable of providing a sealant for a skin pack in which the occurrence of a stringiness phenomenon is inhibited, while maintaining favorable ease of peeling, as compared to conventional sealants for a skin pack, as well as a sealant for a skin pack, and a package for a skin pack using the composition are provided.

### DESCRIPTION OF EMBODIMENTS

Embodiments as examples of the invention will be described hereinbelow. The invention is not restricted in any way by the following embodiments and appropriate modifications may be made within the scope of the invention.

Herein, a numerical value range shown with "to" means a range including numerical values written before and after "to", respectively as the minimum value and the maximum value. In the numerical value range disclosed in a stepwise manner herein, an upper limit value or a lower limit value disclosed in a certain numerical value range may be replaced with an upper limit value or a lower limit value of another numerical value range disclosed in a stepwise manner. In addition, in the numerical value range disclosed in this disclosure, an upper limit value or a lower limit value disclosed in a certain numerical value range may be replaced with values shown in examples.

Herein, in a case in which a plurality of substances corresponding to components are present in a composition, the amount of each component in the composition means a total content of the plurality of substances present in the composition, unless otherwise noted.

Herein, "(meth)acrylic acid" means at least either of acrylic acid and methacrylic acid.

### [Composition for Skin Pack]

The composition for a skin pack herein includes: an ionomer (A) of an ethylene/unsaturated carboxylic acid copolymer having a melt flow rate (JIS K 7210-1999, 190°C, 2160 g load) of 6 g/10 min or more; and a polyolefin (B) having a melt flow rate (JIS K 7210-1999, 190°C, 2160 g load) of 6 g/10 min or less.

When the composition for a skin pack has the above configuration, it is assumed that a sealant for a skin pack, in which the occurrence of a stringiness phenomenon is inhibited while maintaining favorable ease of peeling as compared to the conventional sealants for a skin pack, can be obtained.

Respective components contained in the composition for a skin pack in the present specification will be described in detail hereinbelow.

A melt flow rate (MFR) is a value (g/10 min) measured according to JIS K 7210-1999 at 190°C under a load of 2160 g, unless otherwise specified.

### <Ionomer (A) of Ethylene/unsaturated Carboxylic Acid Copolymer>

The ionomer (A) of an ethylene/unsaturated carboxylic acid copolymer means herein a compound in which at least a part of acidic groups of an ethylene/unsaturated carboxylic acid copolymer (i.e., a base polymer) are neutralized with a metal ion.

The ethylene/unsaturated carboxylic acid copolymer (i.e., the base polymer) which is a constituent of the ionomer is a copolymer obtained by copolymerizing at least ethylene and an unsaturated carboxylic acid, and contains a constituent unit derived from ethylene and a constituent unit derived from the unsaturated carboxylic acid.

The ethylene/unsaturated carboxylic acid copolymer may be any one of a block copolymer, a random copolymer, and a graft copolymer.

From the viewpoint of industrial availability, the ethylene/unsaturated carboxylic acid copolymer is preferably a random copolymer.

Examples of the constituent unit derived from an unsaturated carboxylic acid include constituent units derived from acrylic acid, methacrylic acid, fumaric acid, maleic acid, or the like.

Among them, as the constituent unit derived from an unsaturated carboxylic acid, a constituent unit derived from acrylic acid and a constituent unit derived from methacrylic acid are preferable, and a constituent unit derived from methacrylic acid is most preferable.

The content of an unsaturated carboxylic acid in the ionomer (A) of the ethylene/unsaturated carboxylic acid copolymer in the present specification is preferably from 10% by mass to 20% by mass, more preferably from 10% by mass to 18% by mass, and most preferably from 10% by mass to 17% by mass, with respect to the total constituent units of the ethylene/unsaturated carboxylic acid copolymer, from the viewpoint of suppressing the occurrence of a stringiness phenomenon.

In this regard, the content of an unsaturated carboxylic acid in an ethylene/unsaturated carboxylic acid copolymer means the content of a constituent unit derived from an unsaturated carboxylic acid with respect to the total content of the constituent units of the ethylene/unsaturated carboxylic acid copolymer.

The content of a constituent unit derived from ethylene is preferably from 80% by mass to 90% by mass, more preferably from 82% by mass to 90% by mass, and most preferably from 83% by mass to 90% by mass, with respect to the total constituent units of the ethylene/unsaturated carboxylic acid copolymer.

The ethylene/unsaturated carboxylic acid copolymer may further include a constituent unit derived from a monomer other than ethylene and an unsaturated carboxylic acid (hereinafter also referred to as "additional constituent unit") in addition to the constituent unit derived from ethylene and the constituent unit derived from an unsaturated carboxylic acid.

Examples of such additional constituent unit include constituent units derived from an unsaturated carboxylic acid ester, an unsaturated hydrocarbon other than ethylene (such as propylene, butene, 1,3-butadiene, pentene, 1,3-pentadiene, or 1-hexene), a vinyl ester (such as vinyl acetate, or vinyl propionate), an oxide of vinyl sulfate or vinyl nitrate, a halogen compound (such as vinyl chloride, or vinyl fluoride), a primary or secondary amine containing a vinyl group, carbon monoxide, sulfur dioxide, or the like.

Among them, a constituent unit derived from an unsaturated carboxylic acid ester is preferable as an additional constituent unit.

There is no particular restriction on the unsaturated carboxylic acid ester, as long as it is copolymerizable with ethylene and an unsaturated carboxylic acid. Examples thereof include an unsaturated carboxylic acid alkyl ester.

Examples of the unsaturated carboxylic acid alkyl ester include an unsaturated carboxylic acid alkyl ester in which the alkyl group in the alkyl ester has 1 to 12 carbon atoms, such as an acrylic acid alkyl ester (such as methyl acrylate, ethyl acrylate, isopropyl acrylate, isobutyl acrylate, n-butyl acrylate, or isooctyl acrylate), a methacrylic acid alkyl ester (such as methyl methacrylate, ethyl methacrylate, isobutyl methacrylate, n-butyl methacrylate, or isooctyl methacrylate), or a maleic acid alkyl ester (such as dimethyl maleate or diethyl maleate).

Among these, as the unsaturated carboxylic acid alkyl ester, an alkyl ester of acrylic acid or methacrylic acid, such as methyl acrylate, ethyl acrylate, isopropyl acrylate, isobutyl acrylate, n-butyl acrylate, methyl methacrylate, ethyl methacrylate, isobutyl methacrylate, n-butyl methacrylate, or isooctyl methacrylate, is preferable, and a lower alkyl ester (e.g., an alkyl ester in which the alkyl group has 2 to 5 carbon atoms) of acrylic acid or methacrylic acid is more preferable.

When an ethylene/unsaturated carboxylic acid copolymer contains a constituent unit derived from an unsaturated carboxylic acid ester, preferred specific examples of the ethylene/unsaturated carboxylic acid copolymer include an ethylene/(meth)acrylic acid/alkyl (meth)acrylate copolymer (for example, an ethylene/(meth)acrylic acid/methyl acrylate copolymer, an ethylene/(meth)acrylic acid/ethyl acrylate copolymer, and ethylene/(meth)acrylic acid/butyl acrylate copolymer).

From the viewpoint of ensuring flexibility, the content of such additional constituent unit is preferably from 0.1% by mass to 10% by mass, and more preferably from 1% by mass to 5% by mass, with respect to the total constituent units of the ethylene/unsaturated carboxylic acid copolymer.

There is no particular restriction on the metal ion to be used for neutralizing an acidic group possessed by an ethylene/unsaturated carboxylic acid copolymer.

Examples of the metal ion include an ion of an alkali metal such as lithium, sodium, potassium, rubidium, or cesium, an ion of an alkaline earth metal such as magnesium or calcium, an ion of a transition metal such as zinc, and ions of various metals such as aluminum.

From the viewpoint of easy availability of an industrial product, the metal ion is preferably at least one selected from the group consisting of a zinc ion, a magnesium ion, and a sodium ion, more preferably at least one selected from the group consisting of a zinc ion and a sodium ion, and further preferably a zinc ion.

The metal ions may be used singly, or in combination of two or more kinds thereof.

The degree of neutralization of an ionomer (A) of an ethylene/unsaturated carboxylic acid copolymer is preferably 90 mol% or less, more preferably from 5 mol% to 80 mol%, and further preferably from 10 mol% to 70 mol%.

When the degree of neutralization is 90 mol% or less, it is capable of moderately suppressing ionic aggregation, achieving better suppression of a decrease in flowability, and maintaining the formability more favorably.

When the degree of neutralization is 5 mol% or more, the performance as an ionomer resin can be exhibited more effectively.

In this regard, the term "degree of neutralization" refers herein to the blend ratio (mol%) of a metal ion with respect to the molar quantity of an acidic group (particularly, a carboxyl group) in the ethylene/unsaturated carboxylic acid copolymer (i.e., the base polymer).

As the ionomer (A) of an ethylene/unsaturated carboxylic acid copolymer, a commercially available product on the market may be used. Examples of a commercially available product include HIMILAN^{®} series produced by Dupont-Mitsui Polychemicals Co., Ltd.

The melt flow rate (MFR) of the ionomer (A) of an ethylene/unsaturated carboxylic acid copolymer is 6 g/10 min or more, preferably 8 g/10 min or more, more preferably 10 g/10 min or more, and further preferably 12 g/10 min or more, from the viewpoint of suppressing the occurrence of a stringiness phenomenon.

Although there is no particular restriction on the upper limit of the melt flow rate (MFR), it is preferably 400 g/10 min or less, more preferably 30 g/10 min or less, further preferably 25 g/10 min or less, and most preferably 20 g/10 min or less, from the viewpoint of processing property.

### <Polyolefin (B)>

A composition for a skin pack in the present specification contains a polyolefin (B) having a melt flow rate (JIS K 7210-1999, 190°C, 2160 g load) of 6 g/10 min or less.

The melt flow rate (MFR) of a polyolefin (B) in the invention is 6 g/10 min or less. The melt flow rate (MFR) of a polyolefin (B) is preferably 5 g/10 min or less, and more preferably 4 g/10 min or less.

When the melt flow rate (MFR) of a polyolefin (B) is 6 g/10 min or less, it is capable of attaining satisfactory ease of peeling. Although there is no particular restriction on the lower limit of the melt flow rate (MFR), it is preferably 1 g/10 min or more, and more preferably 2 g/10 min or more, from the viewpoint of processing property.

From the viewpoint of peelability, the polyolefin (B) preferably contains at least one selected from the group consisting of a constituent unit derived from propylene and a constituent unit derived from 1-butene, and more preferably contains a constituent unit derived from propylene. It is preferable that the polyolefin (B) contains, as a main component, at least one selected from the group consisting of a constituent unit derived from propylene and a constituent unit derived from 1-butene. Examples of the polyolefin (B) include a homopolymer of propylene, a copolymer of propylene as a main component with another α-olefin (such as ethylene, 1-butene, 1-pentene, or 4-methyl-1-pentene), a 1-butene homopolymer, and a copolymer of 1-butene and another α-olefin.

Herein, the term "main component" means that the content of the constituent unit is 50% by mass or more with respect to the total constituent units of the polyolefin (B). The description "the polyolefin (B) contains, as a main component, at least one selected from the group consisting of a constituent unit derived from propylene and a constituent unit derived from 1-butene" means that, when the polyolefin (B) contains a constituent unit derived from propylene and a constituent unit derived from 1-butene, the total content of the constituent unit derived from propylene and the constituent unit derived from 1-butene is 50% by mass or more.

More specifically, representative examples of the polyolefin (B) include polypropylene, a propylene/ethylene random copolymer, a propylene/ethylene/1-butene random copolymer, poly(1-butene), and a 1-butene/propylene random copolymer.

In the composition for a skin pack in the present specification, the content of the ionomer (A) of an ethylene/unsaturated carboxylic acid copolymer is from 40% by mass to 75% by mass, preferably from 50% by mass to 75% by mass, and more preferably from 50% by mass to 70% by mass, with respect to the resin components in the composition for a skin pack as 100% by mass, from the viewpoints of maintaining satisfactory ease of peeling and suppressing the occurrence of a stringiness phenomenon.

From the same viewpoints, the content of the polyolefin (B) is from 25% by mass to 50% by mass, preferably from 25% by mass to 45% by mass, with respect to the resin components in the composition for a skin pack as 100% by mass.

The term "resin components" means herein an ionomer (A), a polyolefin (B), and a tackifier resin (C) contained in a composition for a skin pack.

### <Tackifier Resin (C)>

A composition for a skin pack in the present specification may further contain a tackifier resin (C).

Examples of the tackifier resin (C) include an aliphatic hydrocarbon resin, an alicyclic hydrocarbon resin, an aromatic hydrocarbon resin, a styrenic resin, a terpene resin, and a rosin.

Examples of the aliphatic hydrocarbon resin include a polymer formed from a C₄ to C₅ mono- or diolefin (such as 1-butene, isobutylene, butadiene, 1,3-pentadiene, isoprene, or piperylene) as a main component.

Examples of the alicyclic hydrocarbon resin include a resin obtained by polymerizing a diene component in a spent C₄ to C₅ fraction via cyclization dimerization, a resin obtained by polymerizing a cyclic monomer such as cyclopentadiene, and a resin obtained by intranuclear hydrogenation of an aromatic hydrocarbon resin. Examples of the aromatic hydrocarbon resin include a resin formed from C₉ to C₁₀ vinyl aromatic hydrocarbons (such as vinyl toluene, indene, or α-methylstyrene) as a main component.

Herein, the term "main component" means that the content of the constituent unit is 50% by mass or more with respect to the total constituent units of the hydrocarbon resin.

Examples of the styrenic hydrocarbon resin include polymers of styrene, vinyltoluene, α-methylstyrene, and isopropenyltoluene.

Examples of the terpene resin include an α-pinene polymer, a B-pinene polymer, a dipentene polymer, a terpene/phenol copolymer, an α-pinene/phenol copolymer, and a hydrogenated terpene resin.

Examples of a rosin include a rosin, a polymerized rosin, a hydrogenated rosin, a rosin ester, and a rosin phenolic resin and esters thereof.

Among them, use of a hydrogenated resin such as a hydrogenated aromatic hydrocarbon resin or a hydrogenated terpene resin is particularly preferable.

The content of a tackifier resin (C) is preferably from 0% by mass to 25% by mass, more preferably from 1% by mass to 25% by mass, still more preferably from 5% by mass to 25% by mass, particularly preferably from 5% by mass to 20% by mass, and most preferably from 5% by mass to 18% by mass, with respect to the resin components of a composition for a skin pack as 100% by mass from the viewpoint of maintaining satisfactory ease of peel.

An optional additive may be added to a composition for a skin pack in the present specification in addition to the above components. Examples of such an additive include an antioxidant, a heat stabilizer, a light stabilizer, an antistatic agent, a lubricant, and a colorant. In particular, in order to improve the processing property of the composition, it is preferable to add a lubricant. Examples of such a lubricant include a fatty acid amide, high molecular weight polyethylene glycol, hydrogenated castor oil, and silica.

It is effective that such a lubricant is formulated at a content of from about 100 ppm to about 10,000 ppm with respect to the total amount of the composition for a skin pack as 100 parts by mass in a case of an organic compound lubricant, and from about 0.1% by mass to about 3% by mass in a case of an inorganic compound lubricant such as silica.

The use of a lubricant provides advantages in that blocking between the films, sticking of the film to a metal roll, and the like are prevented when a composition for a skin pack in the present specification is subjected to extrusion coating onto a substrate, and the workability in later process steps such as unwinding is enhanced.

Considering the formability and sealing properties, the melt flow rate of a composition for a skin pack in the present specification is preferably from 1 g/10 min to 400 g/10 min, and more preferably from 1 g/10 min to 150 g/10 min.

### <Sealant for Skin Pack>

A sealant for a skin pack according to the present disclosure includes the aforedescribed composition for a skin pack.

As the sealant, the composition for a skin pack may be used in a form of a monolayer, or also in a form of a laminate in which a sealant is laminated as a heat sealable layer on a substrate. Such a substrate may be a stretched or unstretched film, and examples thereof include: a film of a polyester such as poly(ethylene terephthalate), a polyamide, polypropylene, polyethylene, an ethylene/vinyl acetate copolymer, an ethylene/unsaturated carboxylic acid ester copolymer, an ethylene/unsaturated carboxylic acid copolymer or an ionomer thereof, an ethylene/vinyl alcohol copolymer, or the like; paper; an aluminum foil; a film with deposited aluminum, silica, alumina, magnesia, or the like; and a film coated with a gas barrier material such as poly(vinylidene chloride) or poly(vinyl alcohol). The substrate may be a monolayer, or a laminate including two or more layers.

As a method of laminating a composition for a skin pack in the present specification on a substrate, there are various commonly used methods, such as a method in which a composition for a skin pack is directly extruded onto a substrate to form a laminate, a so-called thermal lamination method in which a composition for a skin pack is formed into a film by a blown process or a T-die casting process, and the film is laminated with a substrate, a dry lamination method, a sandwich lamination method, a coextrusion blown method, and a coextrusion T-die method. Any of the above may be applicable.

The thickness of a sealant for a skin pack in the present specification is preferably 1 µm to 200 µm, more preferably 2 µm to 100 µm, and most preferably 5 µm to 50 µm.

When a sealant for a skin pack is used for a release film, the thickness of the substrate is preferably from about 30 µm to about 500 µm from the viewpoint of operability during peeling. When a sealant for a skin pack is used for a bottom material, the thickness of the substrate is not particularly limited.

### <Package for Skin Pack>

A package for a skin pack according to the present disclosure includes a first film and a second film, and encloses content in a skin pack by cohering the first film and the second film together, at least one of the first film or the second film having the sealant for a skin pack.

The sealant for a skin pack is preferably disposed on at least a part of surfaces of the first film and the second film that contact the content. According to another embodiment, the sealant for a skin pack is preferably disposed on at least a part of a surface of at least one of the first film or the second film that contacts the content.

According to another embodiment, it is preferable that the sealant for a skin pack is disposed on at least a part of at least one of a surface of the first film or a surface of the second film that faces the other of the first film or the second film.

Herein, the "content" encompasses various foods, drinks, medicines, and the like, and is not particularly limited insofar as the content can be enclosed in a skin pack.

A package for skin pack in the present specification includes at least a first film and a second film.

In an embodiment, both of the first film and the second film are provided with a sealant for a skin pack including the composition for a skin pack of the present specification. In another embodiment, only the first film is provided with the sealant for a skin pack. In still another embodiment, only the second film is provided with the sealant for a skin pack.

The first film and the second film may each be a monolayer, or a laminate of two or more layers. The first film and the second film may have the same layer configuration, or may have different layer configurations, and are not particularly limited.

According to an embodiment, it is preferable that at least one of the first film or the second film contains an ionomer (D) from the viewpoint of deep drawability. It may be an embodiment in which the first film has at least one layer containing the ionomer (D), and the second film has the sealant for a skin pack, or an embodiment in which the first film has the sealant for a skin pack, and the second film has at least one layer containing the ionomer (D).

Further, it may be an embodiment in which the first film has at least one layer containing the ionomer (D) and the sealant for a skin pack, or an embodiment in which the second film has at least one layer containing the ionomer (D) and the sealant for a skin pack.

The specific layer configurations of the first film and the second film, and the combination of the first film and the second film may be appropriately adjusted depending on the use, purpose, or the like of the package for the skin pack.

There is no particular restriction on the ionomer (D) in the layer containing an ionomer (D), as long as it is a synthetic resin that utilizes a cohesive force of a metal ion.

Examples of the metal ion include an ion of an alkali metal such as lithium, sodium, potassium, rubidium, or cesium, an ion of an alkaline earth metal such as magnesium or calcium, an ion of a transition metal such as zinc, and ions of various metals such as aluminum. At least one selected from the group consisting of a zinc ion and a sodium ion is preferable, and a zinc ion is more preferable.

There is no particular restriction on a base polymer that is a constituent of the ionomer (D). However, an ethylene/unsaturated carboxylic acid copolymer is preferable, and examples thereof include the ethylene/unsaturated carboxylic acid copolymers used for the ionomer (A) described above.

When at least one of the first film or the second film has a layer containing an ionomer (D), the ionomer (D) is preferably a zinc ionomer. In this case, it is preferable that the layer containing a zinc ionomer is disposed on at least a part of the surface that contacts the content.

In this case, the zinc ionomer preferably uses an ethylene/unsaturated carboxylic acid copolymer as the base polymer.

The package for a skin pack of the present specification will be described by referring to an embodiment in which the first film is applied to the lid material side, and the second film is applied to the tray (bottom material) side. However, the present invention is not limited to this embodiment.

For the layer configurations of the lid material and the tray, conventionally known layer configurations may be employed.

Herein, a layer containing an ionomer (D) is denoted as (IO), an EVOH layer is denoted as (B), an ethylene-vinyl acetate copolymer resin layer is denoted as (EVA), a hot melt resin layer is denoted as (HM), a layer containing polyethylene is denoted as (PE), a layer containing polypropylene is denoted as (PP), a layer containing a nylon is denoted as (Ny), a glycol-modified poly(ethylene terephthalate) resin layer is denoted as (PET-G), a foam substrate is denoted as it is, and a sealant for a skin pack in the present specification is denoted as (EZP). Examples of the layer configuration are described below.

The ionomer (D) may be the same as the ionomer (A) included in the sealant (EZP) for a skin pack in the present specification, or different therefrom.

Although the notation of an adhesive layer is omitted, it can be appropriately used between layers as necessary.

### <Lid Material>

(1-1) IO/B/EVA (content side)
(1-2) PE/IO/B/EVA/IO (content side)
(1-3) IO/B/HM (content side)
(1-4) IO/B/IO/EVA (content side)
(1-5) IO/EVA/IO/EZP (content side)
(1-6) Ny/IO/B/EVA/IO (content side)
(1-7) PE/IO/Ny/B/EVA/IO (content side)
(1-8) Ny/IO/Ny/B/Ny/EVA/IO (content side)
(1-9) PET-G/B/IO/EZP (content side)

### <Tray (bottom material)>

(2-1) Foam substrate/PP/B/EZP (content side)
(2-2) PP/B/PP/IO (content side)
(2-3) PP/B/PP/EZP (content side)

For example, the lid material in the case of (1-1) above indicates that a laminate configuration of the lid material includes a layer containing an ionomer (D) (IO), an EVOH layer (B), and an ethylene-vinyl acetate copolymer resin layer (EVA) in this order, and that the ethylene-vinyl acetate copolymer resin layer (EVA) is on the side closest to the content. In this case, the ethylene-vinyl acetate copolymer resin layer (EVA) may directly contact the content, or there may be another layer between the ethylene-vinyl acetate copolymer resin layer (EVA) and the content.

Examples of preferred combinations of the lid material and tray (i.e., bottom material) include a combination of [(1-1), (1-2), (1-6), or (1-7)] and [(2-1) or (2-3)], and a combination of (1-5) and [(2-1), or (2-2)]; and examples of more preferable combinations include a combination of [(1-1), or (1-2)] and [(2-1) ,or (2-3)]; and examples of further preferable combinations includes a combination of (1-2) and (2-1).

In other words, the combination of (1-2) and (2-1) is an embodiment in which the lid material has at least one layer containing at least an ionomer (D), while the tray (bottom material) has a sealant for a skin pack (EZP) according to the present disclosure.

This embodiment can be suitably used in applications of skin-packing food, drugs, or the like.

Among the above embodiments, an embodiment in which at least a part of the surface of the lid material that contacts a food (i.e., content) is a layer containing a zinc ionomer, and at least a part of the surface of the tray (bottom material) that contacts a food (i.e., content) is a sealant for a skin pack according to the present disclosure containing a zinc ionomer is most desirable because this embodiment provides an effect for postponing the best-before date of the food (i.e., content).

### EXAMPLES

Hereinbelow, the invention will be described in more detail with reference to Examples. However, the invention is not restricted by the following Examples as long as the gist of the invention is not exceeded.

A melt flow rate (MFR) was measured in accordance with JIS K 7210-1999.

[Examples 1 to 8, and Comparative Examples 1 to 6]

### - Preparation of Resin Composition -

The following resins were mixed in a blend ratio set forth in Table 1 such that the charged amount became 10 kg. The mixture was charged into an extruder (65 mmϕ, L/D = 28, head Dulmage flight screw) and melt-kneaded at a processing temperature of 160°C to prepare a resin composition. Thus, resin compositions according to the invention (Examples) and resin compositions for comparison (Comparative Examples) were obtained.

### <Ionomer (A) of Ethylene/Unsaturated Carboxylic Acid Copolymer>

● Ionomer 1: Zn-neutralized product of an ethylene/methacrylic acid copolymer (ethylene unit content: 85% by mass, methacrylic acid unit content: 15% by mass, degree of Zn-neutralization: 21%, MFR (190°C, 2160 g load): 16 g/10 min)
● Ionomer 2: Zn-neutralized product of an ethylene/methacrylic acid copolymer (ethylene unit content: 89% by mass, methacrylic acid unit content: 11% by mass, degree of Na-neutralization: 37%, MFR (190°C, 2160 g load): 11 g/10 min)
● Ionomer 3: Zn-neutralized product of an ethylene/methacrylic acid copolymer (ethylene unit content: 85% by mass, methacrylic acid unit content: 15% by mass, degree of Zn-neutralization: 23%, MFR (190°C, 2160 g load): 5 g/10 min)
● Ionomer 4: Zn-neutralized product of an ethylene/methacrylic acid copolymer (ethylene unit content: 88% by mass, methacrylic acid unit content: 12% by mass, degree of Zn-neutralization: 36%, MFR (190°C, 2160 g load): 1.5 g/10 min)
● Ionomer 5: Na-neutralized product of an ethylene/methacrylic acid copolymer (ethylene unit content: 85% by mass, methacrylic acid unit content: 15% by mass, degree of Na-neutralization: 30%, MFR (190°C, 2160 g load): 2.8 g/10 min)

### <Polyolefin (B)>

● PP-1: Polypropylene (random type, MFR (190°C, 2160 g load): 3.1 g/10 min, MFR (230°C, 2160 g load): 6 g/10 min, F317 DV available from Prime Polymer Co., Ltd.)
● PP-2: Polypropylene (homo type, MFR (190°C, 2160 g load): 3.2 g/10 min, MFR (230°C, 2160 g load): 7 g/10 min, F107 BV available from Prime Polymer Co., Ltd.)
● PP-3: Polypropylene (random type, MFR (190°C, 2160 g load): 6.5 g/10 min, MFR (230°C, 2160 g load): 25 g/10 min, F329 RA available from Prime Polymer Co., Ltd.)
● PB-1: Polybutene-1 (homo type, MFR (190°C, 2160 g load): 3.7 g/10 min, BL4000 available from Mitsui Chemicals, Inc.)

### <Tackifier Resin (C)>

- Tackifier resin: "ARKON AM-1" available from Arakawa Chemical Industries, Ltd. (alicyclic hydrocarbon resin having a ring and ball method softening point of 115°C)

Next, as described below, laminates were prepared using the resin compositions obtained above and evaluated.

However, the resin compositions of Comparative Examples 2 and 3 had poor granulation characteristics, and it was not able to produce a laminate using these resin compositions.

The symbol "-" in Table 1 indicates that the corresponding component is not contained.

### - Production of Laminate -

A laminate was produced using the thus-obtained resin compositions. Specifically, using a three-resin, three-layer 40 mmϕ casting machine, and selecting a processing temperature of 200°C and an ethylene/methacrylic acid copolymer (acid content: 9% by mass, MFR: 8 g/10 min) as a resin to be coextruded, the ethylene/methacrylic acid copolymer and the resin compositions obtained above were co-extruded at 230°C and a processing speed of 25 m/min to the thicknesses of 40 µm and 20 µm, respectively, onto a substrate of PET (12 µm)/PE (15 µm) prepared in advance, to thereby yield a laminate of PET (12 µm)/PE (15 µm)/ethylene-methacrylic acid copolymer (40 µm)/resin composition (sealant layer) (20 µm).

### - Peel Strength with respect to Zn Ionomer -

The obtained laminate was heat-sealed onto a 0.1 mm-thick Zn ionomer film (i.e., substrate) in such a manner that the sealant layer side of the laminate faced the Zn ionomer film under conditions of a pressing force of 0.2 MPa, a heating temperature of 160°C, and a heating time of 1.0 sec, and left standing at room temperature for 24 hours. Thereafter, specimens each having a width of 15 mm were cut out from the laminate in each of the MD direction and TD direction, and both sides of the specimens were pulled in opposite directions (in the peeling direction at 180°C) to determine the maximum stresses. The maximum stresses (N/15 mm) were defined as the peel strengths (N/15 mm) of the resin composition from the Zn ionomer in each of the MD direction and the TD direction. The measurement results are shown in Table 1.

In this regard, a preferable peel strength is more than 1.0 N/15 mm and not more than 10 N/15 mm.

It is noted that the Zn ionomer film was produced by a 40 mmϕ single layer casting machine at 230°C using a Zn-neutralized product of an ethylene/methacrylic acid copolymer (ethylene unit content: 85% by mass, methacrylic acid unit content: 15% by mass, degree of Zn-neutralization: 59%, and MFR (190°C, 2160 g load): 0.9 g/10 min).

### - Stringiness -

In the evaluation of the peel strength described above, the peeled portion was visually observed. A thin threadlike resin may be formed in some cases in the peeled portion. This is commonly called stringiness phenomenon. This phenomenon is disliked not only by reason of appearance but also from the standpoint of possible contamination of a food with a foreign matter such as a thread fragment when the content (i.e., a food) is to be taken out from the skin package. Whether a stringiness phenomenon occurred or not was inspected visually and recorded. The measurement results are shown in Table 1.

### - Peel Strength with respect to Na Ionomer and Stringiness -

The laminate obtained in Example 1 was heat-sealed onto a 0.1 mm-thick Na ionomer film (i.e., substrate) in such a manner that the sealant layer side of the laminate faced the Na ionomer film under conditions of a pressing force of 0.2 MPa, a heating temperature of 140°C, and a heating time of 1.0 sec, and left standing at room temperature for 24 hours. Thereafter, a specimen having a width of 15 mm was cut out from the laminate, and both sides of the specimen were pulled in opposite directions (in the peeling direction at 180°C) to determine the maximum stress. The maximum stress (N/15 mm) was defined as the peel strength (N/15 mm) of the resin composition from the Na ionomer. The peel strength of the resin composition from the Na ionomer in the case of the heat seal temperature of 160°C was also determined by a measurement carried out under the same conditions as above except that the heat seal temperature was changed. Also, whether a stringiness phenomenon occurred or not was observed in the same manner as described above.

The results are shown in Table 2.

In this regard, a preferable peel strength is more than 1.0 N/15 mm and not more than 10 N/15 mm.

It is noted that the Na ionomer film was produced by a 40 mmϕ single layer casting machine at 230°C using a Na-neutralized product of an ethylene/methacrylic acid copolymer (ethylene unit content: 85% by mass, methacrylic acid unit content: 15% by mass, degree of Na-neutralization: 54%, and MFR (190°C, 2160 g load): 0.9 g/10 min).

### - Peel Strength with respect to EVA and Stringiness -

The laminate obtained in Example 1 was heat-sealed onto a 0.1 mm-thick EVA (ethylene/vinyl acetate copolymer) film (i.e., substrate) in such a manner that the sealant layer side of the laminate faced the EVA film under conditions of a pressing force of 0.2 MPa, a heating temperature of 140°C, and a heating time of 1.0 sec, and left standing at room temperature for 24 hours. Thereafter, a specimen having a width of 15 mm was cut out from the laminate, and both sides of the specimen were pulled in opposite directions (in the peeling direction at 180°C) to determine the maximum stress. The maximum stress (N/15 mm) was defined as the peel strength (N/15 mm) of the resin composition from the EVA. The peel strength of the resin composition from the EVA in the case of the heat seal temperature of 160°C was determined by a measurement carried out under the same conditions as above except that the heat seal temperature was changed. Also, whether a stringiness phenomenon occurred or not was observed in the same manner as described above.

The results are shown in Table 2.

In this regard, a preferable peel strength is more than 1.0 N/15 mm and not more than 10 N/15 mm.

The EVA film was produced by a 40 mmϕ single layer casting machine at 200°C using an ethylene/vinyl acetate copolymer (ethylene unit content: 90% by mass, vinyl acetate unit content: 10% by mass, and MFR (190°C, 2160 g load): 9 g/10 min).

### - Peel Strength with respect to LDPE and Stringiness -

The laminate obtained in Example 1 was heat-sealed onto a 0.1 mm-thick LDPE (low density polyethylene) film (i.e., substrate) in such a manner that the sealant layer side of the laminate faced the LDPE film under conditions of a pressing force of 0.2 MPa, a heating temperature of 140°C, and a heating time of 1.0 sec, and left standing at room temperature for 24 hours. Thereafter, both the sides of a specimen having a width of 15 mm cut out from the laminate were pulled in opposite directions (in the peeling direction at 180°C) to determine the maximum stress. This maximum stress (N/15 mm) was defined as the peel strength (N/15 mm) of the resin composition from the LDPE. The peel strength of the resin composition from the LDPE in the case of the heat seal temperature of 160°C was determined by a measurement carried out under the same conditions as above except that the heat seal temperature was changed. Also, whether a stringiness phenomenon occurred or not was observed in the same manner as described above.

The results are shown in Table 2.

In this regard, a preferable peel strength is more than 1.0 N/15 mm and not more than 10 N/15 mm.

The LDPE film was produced by a 40 mmϕ single layer casting machine at 200°C using high pressure low density polyethylene (917 kg/m³, and MFR (190°C, 2160 g load): 7 g/10 min).

**Table 1**

| | | | Example | | | | | | | | Comparative Example | | | | | |
|---|---|---|---|---|---|---|---|---|---|---|---|---|---|---|---|---|
| Resin composition | | | 1 | 2 | 3 | 4 | 5 | 6 | 7 | 8 | 1 | 2 | 3 | 4 | 5 | 6 |
| Resin | MFR (190°C) | Metal | | | | | | | | | | | | | | |
| Ionomer 1 | 16 | Zn | 60 | 50 | 55 | 50 | 70 | 60 | - | 60 | 80 | 70 | 60 | - | - | - |
| Ionomer 2 | 11 | Na | - | - | - | - | - | - | 60 | - | - | - | - | - | - | - |
| Ionomer 3 | 5 | Zn | - | - | - | - | - | - | - | - | - | - | - | - | 60 | |
| Ionomer 4 | 1.5 | Zn | - | - | - | - | - | - | - | - | - | - | - | - | - | 60 |
| Ionomer 5 | 2.8 | Na | - | - | - | - | - | - | - | - | - | - | - | 60 | - | - |
| PP-1 | 3.1 | - | 30 | 40 | 30 | 35 | 30 | | 30 | - | - | - | - | 30 | 30 | 30 |
| PP-2 | 3.2 | - | - | - | - | - | - | 30 | | - | - | - | - | - | - | - |
| PP-3 | 6.5 | - | - | - | - | - | - | - | - | | 10 | 20 | 30 | - | - | -- |
| PB-1 | 3.7 | - | - | - | - | - | - | - | - | 30 | | | | - | - | -- |
| Tackifier resin | | - | 10 | 10 | 15 | 15 | | 10 | 10 | 10 | 10 | 10 | 10 | 10 | 10 | 10 |
| Granulation | | | Possible | Possible | Possible | Possible | Possible | Possible | Possible | Possible | Possible | Not possible | Not possible | Possible | Possible | Possible |

### Peel strength with respect to Zn ionomer

| | | | | | | | | | | | | | | | | |
|---|---|---|---|---|---|---|---|---|---|---|---|---|---|---|---|---|
| Peel strength (N/15mm) | MD | 160°C | 3.5 | 1.5 | 2.5 | 2.1 | 4.8 | 3.9 | 1.1 | 5.9 | 18.5 | - | - | 1 | <2 | <1.5 |
| | TD | 160°C | 4.5 | 2.4 | 3 | 3.1 | 6 | 4.7 | 3.1 | 6.4 | 28.7 | - | - | 2.8 | <2 | <1.5 |
| Stringiness | MD | 160°C | No | No | No | No | No | No | No | No | No | - | - | No | Yes | Yes |
| | TD | 160°C | No | No | No | No | No | No | No | No | No | - | - | Yes | Yes | Yes |

**Table 2**

| Type of resin composition | | | Example 1 | | | |
|---|---|---|---|---|---|---|
| Type of substrate | | | Zn Ionomer | Na Ionomer | EVA | LDPE |
| Peel strength(H/15mm) | MD | 160°C | 3.5 | 4.1 | 4.5 | 4.6 |
| | TD | 160°C | 4.5 | 5.3 | 4.8 | 4.6 |
| Stringiness | MD | 160°C | No | No | No | No |
| | TD | 160°C | No | No | No | No |

As can be seen from Table 1, the sealants for a skin pack obtained from the compositions for a skin pack of Examples showed suppressed occurrence of a stringiness phenomenon, while maintaining satisfactory ease of peeling. On the other hand, any of the sealants for a skin pack obtained from the compositions for a skin pack of Comparative Examples were inferior to those of Examples because the peelability was unsatisfactory, or even if the peelability was satisfactory, a stringiness phenomenon occurred.

Further, as can be seen from Table 2, the sealant for a skin pack obtained from the composition for a skin pack of Example 1 maintained satisfactory ease of peeling with respect to various substrates including the film of Zn ionomer, and did not cause a stringiness phenomenon.

## Claims

1. A composition for a skin pack, comprising:
an ionomer (A) of an ethylene/unsaturated carboxylic acid copolymer having a melt flow rate (JIS K 7210-1999, 190°C, 2160 g load) of 6 g/10 min or more; and
a polyolefin (B) having a melt flow rate (JIS K 7210-1999, 190°C, 2160 g load) of 6 g/10 min or less,
wherein a content of the ionomer (A) is from 40% by mass to 75% by mass with respect to 100% by mass of the resin components in the composition for a skin pack, and
wherein a content of the polyolefin (B) is from 25% by mass to 50% by mass with respect to 100% by mass of resin components in the composition for a skin pack.

2. The composition for a skin pack according to claim 1, wherein a content of an unsaturated carboxylic acid in the ethylene/unsaturated carboxylic acid copolymer is from 10% by mass to 20% by mass.

3. The composition for a skin pack according to claim 1 or 2, wherein the polyolefin (B) comprises at least one selected from the group consisting of a constituent unit derived from propylene and a constituent unit derived from 1-butene.

4. The composition for a skin pack according to any one of claims 1 to 3, wherein the ionomer (A) comprises at least one selected from the group consisting of a zinc ionomer of an ethylene/unsaturated carboxylic acid copolymer and a sodium ionomer of an ethylene/unsaturated carboxylic acid copolymer.

5. The composition for a skin pack according to any one of claims 1 to 4, wherein the content of the ionomer (A) is from 50% by mass to 75% by mass with respect to 100% by mass of the resin components in the composition for a skin pack.

6. The composition for a skin pack according to any one of claims 1 to 5, further comprising a tackifier resin (C), wherein a content of the tackifier resin (C) is from 5% by mass to 25% by mass with respect to 100% by mass of the resin components in the composition for a skin pack.

7. A sealant for a skin pack, comprising the composition for a skin pack according to any one of claims 1 to 6.

8. A package for a skin pack, comprising:
a first film; and
a second film,
wherein the first film and the second film are capable of being cohered together to enclose content in a skin pack, and
wherein at least one of the first film or the second film comprises the sealant for a skin pack according to claim 7.

9. The package for a skin pack according to claim 8, wherein the sealant for a skin pack is disposed on at least a part of a surface of at least one of the first film or the second film that contacts the content.

10. The package for a skin pack according to claim 8 or 9, wherein:
the first film comprises at least one layer comprising an ionomer (D); and
the second film comprises the sealant for a skin pack.

11. The package for a skin pack according to claim 10, wherein:
the ionomer (D) comprises a zinc ionomer; and
a layer comprising the ionomer (D) is disposed on at least a part of a surface of the first film that contacts the content.

## Patentansprüche

1. Zusammensetzung für eine Skin-Packung, umfassend:
ein Ionomer (A) eines Copolymers aus Ethylen und ungesättigter Carbonsäure mit einem Schmelzflussindex (JIS K 7210-1999, 190 °C, 2160 g Last) von 6 g/10 min oder mehr; und
ein Polyolefin (B) mit einem Schmelzflussindex (JIS K 7210-1999, 190 °C, 2160 g Last) von 6 g/10 min oder weniger,
wobei ein Gehalt des Ionomers (A) von 40 Masse-% bis 75 Masse-% bezogen auf 100 Masse-% der Harzkomponenten in der Zusammensetzung für eine Skin-Packung beträgt, und
wobei ein Gehalt des Polyolefins (B) von 25 Masse-% bis 50 Masse-% bezogen auf 100 Masse-% der Harzkomponenten in der Zusammensetzung für eine Skin-Packung beträgt.

2. Zusammensetzung für eine Skin-Packung nach Anspruch 1, wobei ein Gehalt an ungesättigter Carbonsäure in dem Copolymer aus Ethylen und ungesättigter Carbonsäure von 10 Masse-% bis 20 Masse-% beträgt.

3. Zusammensetzung für eine Skin-Packung nach Anspruch 1 oder 2, wobei das Polyolefin (B) mindestens eines umfasst, das ausgewählt ist aus der Gruppe bestehend aus einer von Propylen abgeleiteten Grundeinheit und einer von 1-Buten abgeleiteten Grundeinheit.

4. Zusammensetzung für eine Skin-Packung nach einem der Ansprüche 1 bis 3, wobei das Ionomer (A) mindestens eines umfasst, das ausgewählt ist aus der Gruppe bestehend aus einem Zink-Ionomer eines Copolymers aus Ethylen und ungesättigter Carbonsäure und einem Natrium-Ionomer eines Copolymers aus Ethylen und ungesättigter Carbonsäure.

5. Zusammensetzung für eine Skin-Packung nach einem der Ansprüche 1 bis 4, wobei der Gehalt des Ionomers (A) von 50 Masse-% bis 75 Masse-% bezogen auf 100 Masse-% der Harzkomponenten in der Zusammensetzung für eine Skin-Packung beträgt.

6. Zusammensetzung für eine Skin-Packung nach einem der Ansprüche 1 bis 5, ferner umfassend ein klebrigmachendes Harz (C), wobei ein Gehalt des klebrigmachenden Harzes (C) 5 Masse-% bis 25 Masse-% bezogen auf 100 Masse-% der Harzkomponenten in der Zusammensetzung für eine Skin-Packung beträgt.

7. Dichtungsmittel für eine Skin-Packung, umfassend die Zusammensetzung für eine Skin-Packung nach einem der Ansprüche 1 bis 6.

8. Verpackung für eine Skin-Packung, umfassend:
eine erste Folie; und
eine zweite Folie,
wobei die erste Folie und die zweite Folie in der Lage sind, aneinander zu haften, um den Inhalt in einer Skin-Packung einzuschließen, und
wobei mindestens eine der ersten Folie oder der zweiten Folie das Dichtungsmittel für eine Skin-Packung nach Anspruch 7 umfasst.

9. Verpackung für eine Skin-Packung nach Anspruch 8, wobei das Dichtungsmittel für eine Skin-Packung auf mindestens einem Teil einer Oberfläche von mindestens einer der ersten Folie oder der zweiten Folie angeordnet ist, die den Inhalt berührt.

10. Verpackung für eine Skin-Packung nach Anspruch 8 oder 9, wobei:
die erste Folie mindestens eine Schicht umfasst, die ein Ionomer (D) umfasst; und
die zweite Folie das Dichtungsmittel für eine Skin-Packung umfasst.

11. Verpackung für eine Skin-Packung nach Anspruch 10, wobei:
das Ionomer (D) ein Zink-Ionomer umfasst; und
eine Schicht, die das Ionomer (D) umfasst, auf mindestens einem Teil einer Oberfläche der ersten Folie angeordnet ist, die den Inhalt berührt.

## Revendications

1. Composition pour un pelliplacage, comprenant :
un ionomère (A) d'un copolymère d'éthylène et d'acide carboxylique insaturé ayant un débit à l'état fondu (JIS K 7210-1999, 190°C, charge de 2160 g) de 6 g/10 min ou plus ; et
une polyoléfine (B) ayant un débit à l'état fondu (JIS K 7210-1999, 190°C, charge de 2160 g) de 6 g/10 min ou moins,
dans laquelle une teneur en ionomère (A) est de 40 % en masse à 75 % en masse par rapport à 100 % en masse des composants de résine dans la composition pour un pelliplacage, et
dans laquelle une teneur en polyoléfine (B) est de 25% en masse à 50% en masse par rapport à 100% en masse de composants de résine dans la composition pour un pelliplacage.

2. Composition pour un pelliplacage selon la revendication 1, dans laquelle une teneur en acide carboxylique insaturé dans le copolymère d'éthylène et d'acide carboxylique insaturé est de 10 % en masse à 20 % en masse.

3. Composition pour un pelliplacage selon la revendication 1 ou 2, dans laquelle la polyoléfine (B) comprend au moins l'un sélectionné dans le groupe constitué d'une unité constitutive dérivée de propylène et d'une unité constitutive dérivée de 1-butène.

4. Composition pour un pelliplacage selon l'une quelconque des revendications 1 à 3, dans laquelle l'ionomère (A) comprend au moins l'un sélectionné dans le groupe constitué d'un ionomère de zinc d'un copolymère d'éthylène et d'acide carboxylique insaturé et d'un ionomère de sodium d'un copolymère d'éthylène et d'acide carboxylique insaturé.

5. Composition pour un pelliplacage selon l'une quelconque des revendications 1 à 4, dans laquelle la teneur en ionomère (A) est de 50 % en masse à 75 % en masse par rapport à 100 % en masse des composants de résine de la composition pour un pelliplacage.

6. Composition pour un pelliplacage selon l'une quelconque des revendications 1 à 5, comprenant en outre une résine tackifiante (C), dans laquelle une teneur en résine tackifiante (C) est de 5 % en masse à 25 % en masse par rapport à 100 % en masse des composants de résine dans la composition pour un pelliplacage.

7. Agent d'étanchéité pour un pelliplacage, comprenant la composition pour un pelliplacage selon l'une quelconque des revendications 1 à 6.

8. Emballage pour un pelliplacage, comprenant :
un premier film; et
un deuxième film,
dans lequel le premier film et le deuxième sont capables d'être intercollés pour enfermer un contenu dans un pelliplacage, et
dans lequel au moins un du premier film ou du deuxième film comprend l'agent d'étanchéité pour un pelliplacage selon la revendication 7.

9. Emballage pour un pelliplacage selon la revendication 8, dans lequel l'agent d'étanchéité pour un pelliplacage est disposé sur au moins une partie d'une surface d'au moins un du premier film ou du deuxième film qui est en contact avec le contenu.

10. Emballage pour un pelliplacage selon la revendication 8 ou 9, dans lequel :
le premier film comprend au moins une couche comprenant un ionomère (D) ; et
le deuxième film comprend l'agent d'étanchéité pour un pelliplacage.

11. Emballage pour un pelliplacage selon la revendication 10, dans lequel :
l'ionomère (D) comprend un ionomère de zinc ; et
une couche comprenant l'ionomère (D) est disposée sur au moins une partie d'une surface du premier film qui est en contact avec le contenu.
